Europäisches Patentamt

(19) European Patent Office

Office européen des brevets

(11) Publication number: **0 101 995**
**B1**

(12) **EUROPEAN PATENT SPECIFICATION**

(45) Date of publication of patent specification: **03.12.86**

(21) Application number: **83107837.3**

(22) Date of filing: **09.08.83**

(51) Int. Cl.⁴: **G 11 B 5/84,** G 11 B 5/62,
H 01 F 1/26

(54) **Magnetic recording medium and method of producing such a medium.**

(30) Priority: **30.08.82 US 413210**

(43) Date of publication of application:
**07.03.84 Bulletin 84/10**

(45) Publication of the grant of the patent:
**03.12.86 Bulletin 86/49**

(84) Designated Contracting States:
**DE FR GB**

(56) References cited:
**US-A-3 451 934**
**US-A-3 916 038**

**Patent Abstracts of Japan, vol. 2, no. 76, 16 June 1978, page 859C78**

(73) Proprietor: **International Business Machines Corporation**
**Old Orchard Road**
**Armonk, N.Y. 10504 (US)**

(72) Inventor: **Macar, Haik**
**730 Piercy Road**
**San Jose California 95138 (US)**
Inventor: **Traeg, Hans**
**1638 Bearden Drive**
**Los Gatos California 95030 (US)**

(74) Representative: **Hobbs, Francis John**
**IBM United Kingdom Limited Intellectual Property Department Hursley Park**
**Winchester Hampshire SO21 2JN (GB)**

Courier Press, Leamington Spa, England.

## Description

This invention relates to a magnetic recording medium and a method of producing such a medium.

Conventional magnetic recording media structures, both flexible and rigid, consist of a magnetic material, usually ferric oxide, sprayed or otherwise coated over a nonmagnetic substrate (polyethylene terephthalate for flexible magnetic tapes and disks, and aluminium alloy substrates for rigid disks). In particular, the aluminium alloy substrates for rigid disks require extensive machining and other labour-intensive operations to render them suitable for the application thereto of a magnetic recording layer.

The invention seeks to provide a moulded, substantially homogeneous magnetic recording medium.

US—A—3,451,934 discloses a process for moulding magnetic material in which iron particles are individually coated with resin. Coating is achieved by mixing the iron particles with a polymeric resin, to which a solvent has been added. After solidifying of the mixture by evaporation of the solvent the material is powdered. The powdered material is moulded into the desired shape under pressures from $6.8 \times 10^6$ to $4.8 \times 10^7$ Pascals (1000 to 7000 pounds per square inch) while heating the material to its softening temperature. US—A—3,916,038 discloses a process for producing a mouldable magnetic particulate composition comprising finely divided particles of a ferrite compound coated with a thermoplastic polymer derived from one or more ethylenically unsaturated monomers. Neither of these prior documents is concerned with the production of magnetic recording media.

Prior to the present invention, suspension of magnetic oxide particles in polycarbonate substances had been limited because of two basic problems. First, no practical method existed for preparing a uniform mixture of a magnetic oxide and a polycarbonate substance. The normal mixture of magnetic oxide powder with plastics pellets produces very uneven distribution of the magnetic material.

A second problem has been temperature drop. The temperature difference between the melting point of the resin and the temperature of the mould has been as high as 260°C (500°F). However, the present method enables this temperature difference to be reduced to less than 149°C (300°F), which helps to produce flat and uniform magnetic disks.

A method of producing a magnetic recording medium comprises, according to the invention, the successive steps of:

mixing magnetic particles with molten polyethersulfone after wetting and sizing agents have been added to it to form a liquid mixture, cooling the liquid mixture to form a solid mixture, shredding the solid mixture into pellets, and injection moulding the pellets to form a magnetic recording medium.

The invention and how it can be carried out will now be described by way of example. Powdered magnetic metal oxide (e.g. ferric oxide) is mixed with molten polyethersulfone resin at any desired concentration by volume, and then the mixture is compressed through a series of metal meshes. The mixture is then cooled and shredded into very small pellets. Each pellet now contains 10—50% of magnetic metal oxide enveloped in a plastic coating. When these pellets are put through an injection mould, a rigid magnetic recording medium (for example, a disk) is produced which lends itself to magnetic orientation of the magnetic particles therein while the molten substance is still in the hot mould.

Best results are ensured if the polyethersulfone (PES) is allowed to remain at a constant temperature of 302°C (575°F) while mixing the $Fe_2O_3$ powder. The mixing must be done after wetting and sizing agents have been mixed uniformly with the PES molten material. $Fe_2O_3$ powder must be mixed at a very slow rate.

The technique of the present invention produces a substantially uniform magnetic recording structure with the ferric oxide particles distributed through the PES binder. We have found that both surfaces of disks produced by this method have thin layers of PES thereon, which layers are useful in providing a lubricating function for a magnetic transducer associated with the disk.

While this medium lends itself to perpendicular recording, it is also satisfactory for the more conventional longitudinal recording.

Because data can be recorded on and read from the present magnetic structure with a single pole read/write head it is preferable to conventional aluminium or plastic substrate magnetic media. It has no vibrational characteristics; therefore data is not lost with shock or vibration.

It has been found that a mould made from 420 stainless steel with 44—46 RC hardness will produce a highly polished mirror finish.

The following are representative of suitable values for the major parameters of the moulding process when water is used as the mould coolant:—

| | |
|---|---|
| Injection pressure | $6.2 \times 10^7$ Pascals (9000 psi) |
| Holding pressure | $3.4 \times 10^7$ Pascals (5000 psi) |
| Injection speed | Medium |
| Screw speed | 80 rpm |
| Stock temperature | 360°C (680°F) |
| Mould temperature | 110°C (230°F) |
| Injection time | 13 seconds |
| Hold time | 15 seconds |
| Mould close time | 10 seconds |
| Cycle time | 25 seconds |

A significant increase in surface finish can be achieved with mould temperatures above 176°C (350°F). For example, a moulding process in accordance with the invention has been carried out successfully at a mould temperature of 201°C (400°F), using oil as the mould coolant. Rigid magnetic disks of 13.3 cm and 20.3 cm in diameter have been successfully prepared, with both 10% and 50% ferric oxide concentration in polyethersulfone resin.

## Claims

1. Method of producing a magnetic recording medium comprising the successive steps of: mixing magnetic particles with molten polyethersulfone after wetting and sizing agent have been added to it to form a liquid mixture, cooling the liquid mixture to form a solid mixture, shredding the solid mixture into pellets, and injection moulding the pellets to form a magnetic recording medium.

2. A method as claimed in claim 1, in which the magnetic particles are mixed with the polyethersulfone at a temperature of approximately 302°C (575°F).

3. A method as claim in claim 1 or claim 2, in which the magnetic particles are ferric oxide particles.

4. A method as claimed in claim 3, in which the mixture contains between 10 and 50 per cent ferric oxide by weight.

5. A method as claimed in any preceding claim, in which the magnetic recording medium has the form of a rigid disk.

## Patentansprüche

1. Verfahren zur Erzeugung eines magnetischen Aufzeichnungsmediums mit den aufeinanderfolgenden Verfahrensschritten des Mischens von magnetischen Teilchen mit geschmolzenem Polyäthersulfon, nachdem Netz- und Schlichtmittel zugesetzt worden sind, zur Ausbildung eines flüssigen Gemischs, Kühlens des flüssigen Gemischs zur Bildung eines festen Gemischs, Zerkleinern des festen Gemischs zu Granulat, und Spritzgießens des Granulats zur Ausbildung eins magnetischen Aufzeichnungsmediums.

2. Verfahren nach Anspruch 1, bei welchem die magnetischen Teilchen mit dem Polyäthersulfon bei einer Temperatur von ungefähr 302°C (575°F) gemischt werden.

3. Verfahren nach Anspruch 1 oder 2, bei welchem die magnetischen Teilchen Ferrioxid-Teilchen sind.

4. Verfahren nach Anspruch 3, bei welchem das Gemisch zwischen 10 und 50 Gewichtsprozent Ferrioxid enthält.

5. Verfahren nach irgendeinem vorstehenden Ansprüche, bei welchem das magnetische Aufzeichnungsmedium die Form einer Platte hat.

## Revendications

1. Procédé de fabrication d'un support d'enregistrement magnétique comprenant les phases opératoires successives consistant à: mélanger des particules magnétiques à de la polyéthersulfone fondue après adjonction d'agents de lubrification et d'agent d'encollage à cette dernière de manière à former un mélange liquide, refroidir le mélange liquide de manière à former un mélange solide, subdiviser le mélange solide sous la forme de pastilles, et mouler par injection les pastilles sous la forme d'un support d'enregistrement magnétique.

2. Procédé selon la revendication 1, selon lequel les particules magnétiques sont mélangées à la polyéthersulfone à une température égale à environ 302°C (575°F).

3. Procédé selon la revendication 1 ou 2, selon lequel les particules magnétiques sont des particules d'oxyde ferrique.

4. Procédé selon la revendication 3, selon lequel le mélange contient entre 10 et 50 pour cent en poids d'oxyde ferrique.

5. Procédé selon l'une quelconque des revendications précédentes selon lequel le support d'enregistrement magnétique possède la forme d'un disque rigide.